# EUROPÄISCHE PATENTSCHRIFT

(11) **EP 0 736 290 B1**
(45) Veröffentlichungstag und Bekanntmachung des Hinweises auf die Patenterteilung: **22.03.2000**
(21) Anmeldenummer: 96101953.6
(22) Anmeldetag: 10.02.1996
(51) Int. Cl.: A61C 19/10

(54) **Zahnhalteplatte**
Teeth supporting plate
Tablette de support pour dents

(30) Priorität: 10.03.1995 DE 19508760
(43) Veröffentlichungstag der Anmeldung: 09.10.1996
(73) Patentinhaber: IVOCLAR AG, FL-9494 Schaan (LI)
(72) Erfinder: Foser, Hans Peter, FL-9496 Balzers (LI)
(74) Vertreter: Baronetzky, Klaus, Dipl.-Ing.

(56) Entgegenhaltungen:
- DE-A- 3 831 919
- DE-U- 9 214 839
- US-A- 2 243 583

## Beschreibung

Die Erfindung betrifft eine Zahnhalteplatte, gemäß dem Oberbegriff von Anspruch 1.

Derartige Zahnhalteplatten sind seit längerem bekannt. Sie weisen einen im wesentlichen quaderförmigen Plattenkörper auf, der eine Wachsaufnahme bildet, die sich in Form einer im wesentlichen ebenfalls quaderförmigen Nut flach quer über den Plattenkörper erstreckt. Oberhalb und unterhalb der Nut sind dementsprechend vortretende Ober- und Unterstege vorgesehen, die zu Beschriftungszwecken ausgenutzt werden können. Daneben bieten diese Flächen Schutz für die auf der Nut aufzubringenden Zähne, und ermöglichen in ihrer Breite eine Anpassung an unterschiedliche Zahnarten, wie Frontzähne und Backenzähne.

Die Wachsaufnahme wird zur Lagerung der Zähne mit Klebewachs oder einer anderen zähviskosen Massen gefüllt. Anstelle von Wachs können auch andere Stoffe, wie Kunststoffe mit einer gewissen Klebefähigkeit, eingesetzt werden, wobei sich jedoch Wachs am besten bewährt hat. Wachs ist nämlich auf Dauer zähviskos und eignet sich daher besonders gut für die gewünschte Lagerung der Zähne.

In dieses Wachs werden die Zähne in der gewünschten Weise eingedrückt, wodurch sich eine gewisse Vertiefung in der Wachsmasse ergibt. Es ist erwünscht, daß die Zähne bei Bedarf entnommen werden können, aber auch wieder eingesetzt werden können, ohne daß einzelne Zähne sich versehentlich aus der Lagerung in der Wachsmasse lösen.

Die Lagerung in der Wachsmasse hat sich im Grunde über Jahrzehnte bewährt, und ist insbesondere geeigneter als eine Lagerung in geformten Einzelausnehmungen über Klebstoffe, wie sie beispielsweise in der DE-GM 74 03 850 und der DE-OS 29 47 094 vorgeschlagen wurden.

Zwar bietet eine derartige Lagerung bei entsprechender Anpassung der Einzelausnehmungen an die Basalflächen der Zähne eine recht gute Abstützung. Gemäß der letztgenannten Offenlegungsschrift kann der Träger auch bogenförmig etwa im Sinne der natürlichen Kiefernkrümmung ausgebildet sein. Bei dieser Ausgestaltung ist jedoch die Abstützung im mittleren Bereich nahezu nicht vorhanden, so daß die Zahnhalteplatte sich beim Wiedereindrücken eines Zahnes in der Mitte sehr leicht verbiegt. Hierdurch besteht die Gefahr, daß die neben dem erneut eingedrückten Zahn befindlichen Zähne sich aus ihren Einzelausnehmungen, die sich dann mitverformen, lockern oder sogar herausgedrückt werden.

Ferner ist bei der Lösung gemäß der DE-OS-29 47 094 nachteilig, daß die Einzelausnehmungen je an die unterschiedlichen Zahnformen angepaßt werden müssen. Dies bedingt, daß eine erhebliche Anzahl von unterschiedlichen Zahnhalteplatten auf Vorrat gehalten werden muß, wenn eine ausreichende Abstützung der Zähne gewünscht ist. Wenn nämlich lediglich eine ungenaue Anpassung an die Zahnform vorgenommen wird, besteht die Gefahr, daß der betreffende Zahn nicht richtig mit dem in einem Näpfchen vorgesehenen Klebemittel in Berührung kommt, oder daß er seitlich so schlecht geführt ist, daß eine sichere Aufnahme nicht gewährleistet ist. Daher hat sich diese Zahnhalteplatte nicht durchgesetzt.

Ein weiteres Problem der bekannten Zahnhalteplatten ist die Abstützung der Zähne in Querrichtung. Bereits, um die Menge des erforderlichen Wachses gering zu halten, wird die Wachsaufnahme so schmal wie möglich gemacht. Andererseits muß die Zahnhalteplatte geeignet sein, auch unterschiedliche Größen von Zähnen, nämlich beispielsweise sowohl Molare als auch Frontzähne aufzunehmen. Die Frontzähne werden hierbei liegend in das Wachs eingedrückt, wobei sich beispielsweise an einer mittig angebrachte Reihe von Frontzähnen rechts und links je der zugehörige Eckzahn anschließen soll. Ein Eckzahn ist regelmäßig etwas größer und kräftiger als die Frontzähne.

Wenn Seitenzähne auf dem Zahnhalteplättchen präsentiert werden, gilt entsprechendes, nachdem die seitlich angebrachten Molaren regelmäßig größer und kräftiger als die mittig angebrachten Prämolaren sind. In der Praxis zeigt es sich, daß die kräftigeren Zähne auch stärker eingedrückt werden. Dann ist jedoch die Entnahme praktisch nicht durch senkrechtes Herausziehen möglich, sondern der Zahn muß für die Entnahme gekippt werden. Dies liegt darin begründet, daß das Klebewachs eine ausreichende Klebereserve haben muß, um sowohl bei höheren als auch bei tieferen Temperaturen zu kleben, so daß die Klebekraft bei normaler Raumtemperatur bereits recht hoch ist.

Demgegenüber liegt der Erfindung die Aufgabe zugrunde, eine Zahnhalteplatte gemäß dem Oberbegriff von Anspruch 1 zu schaffen, die eine verbesserte Handhabung gerade auch bei unterschiedlichen Zahngrößen und -formen erlaubt und mit welcher eine vergleichsweise geringe Wachsmenge ermöglicht wird.

Diese Aufgabe wird erfindungsgemäß durch Anspruch 1 gelöst. Vorteilhafte Weiterbildungen ergeben sich aus den Unteransprüchen.

Durch die Vorwölbung von Ober- und Untersteg lassen sich überraschend mehrere Vorteile erzielen. Die mittig angeordneten Prämolaren sind durch die schürzenartig hochgezogenen Ober- und Unterstege besser gegen versehentlichen seitlichen Druck, der ein Loslösen bedingen könnte, geschützt. Demgegenüber bieten die am Ende des Zahnplättchens angeordneten Molaren eine bessere seitliche Angriffsfläche, nachdem die Ober- und Unterstege an dieser Stelle praktisch heruntergezogen sind. Diese Zähne können dementsprechend leichter durch Kippen herausgelöst werden.

Bei der Verwendung einer Front-/Eckzahngarnitur in der erfindungsgemäßen Zahnhalteplatte ergibt sich zudem der Vorteil, daß die dann an den Enden angebrachten Eckzähne praktisch tiefer gelagert werden können, nachdem sie nicht so schnell in Anlage mit den Ober- und Unterstegen gelangen. Aufgrund der flachen Lagerung von Front-/Eckzähnen ragen diese regelmäßig in die Bereiche der Ober- und Unterstege über die Wachsaufnahme hinaus. Mit dieser Ausgestaltung wird dementsprechend verhindert, daß die mittleren Frontzähne gegenüber den Eckzähnen zurückspringen. Je nach dem Grad der Vorwölbung ist es auch möglich, die mittleren Frontzähne gegenüber den Eckzähnen vorspringen zu lassen, was einen ästhetisch günstigeren Eindruck bei der Präsentation der Zähne auf der Zahnhalteplatte bietet.

Bei der Verwendung des erfindungsgemäßen Zahnhalteplättchens für Front-/Eckzähne ergibt sich der weitere Vorteil, daß bei dem üblichen Andrückvorgang - bei welchem kleinere Zähne regelmäßig weniger stark angedrückt werden als größere Zähne - alle Zähne gleichmäßig auf den Kanten der Ober- und Unterstege abgestützt werden können und damit praktisch eine Art Dreipunktlagerung, die sehr stabil ist, oder mindestens eine Lagerung auf einer Kante, also entweder auf der der Wachsaufnahme benachbarten Kante des Oberstegs oder derjenigen des Unterstegs gewährleistet ist. Die Entnahme ist dann relativ leicht durch Untergreifen der Spitze möglich, wobei auch - entsprechend der Verwendung von Molaren und Prämolaren - bei den am Ende angebrachten Eckzähnen ein etwas vergrößerter Greifraum besteht.

Durch die flache Ausgestaltung des Bodens ist andererseits eine gute Auflage und Abstützung der Wachsaufnahme möglich, so daß die Zahnhalteplatte sich nicht verformt, wenn die Zähne eingedrückt werden, auch wenn eine relativ geringe Materialstärke für den Plattenkörper verwendet wird.

Gemäß einer vorteilhaften Ausgestaltung ist es vorgesehen, die Seitenstege gegenüber den benachbarten Bereichen von Ober- und Unterstegen hochzuziehen. Sie bilden dann eine Art Stoßschutz, so daß die Zähne nicht nur durch die mittig hochgewölbten Ober- und Unterstege, sondern auch durch die Seitenstege rundum geschützt sind. Trotz der hochgezogenen Seitenstege ist bei dieser Ausgestaltung der Erfindung die Zugänglichkeit der Molaren ohne weiteres gegeben, nachdem in den seitlichen Griffbereichen der Molaren die Ober- und Unterstege praktisch abgesenkt sind.

In einer vorteilhaften Ausgestaltung sind den Boden der Wachsaufnahme zur Unterlage hin ringsum umgebende Stützflansche minimaler Höhe vorgesehen. Hierdurch läßt sich die häufig unerwünschte Flächenauflage vermeiden, und sollte der Boden tatsächlich um die geringe Höhe der Stützflansche durchgedrückt werden, ist dies unschädlich, da das Klebewachs regelmäßige eine gewisse Elastizität aufweist, so daß die benachbarten Zähne durch das Andrücken nicht gelockert werden.

Bevorzugt sind die Stege innen hohl ausgebildet, was der Material- und Gewichtsersparnis der Zahnhalteplatte zugute kommt.

Durch die Vorwölbung von Ober- und Untersteg werden zudem die /Zähne in ästhetisch ansprechender Weise präsentiert, denn hierdurch wird die natürliche Zahnausrichtung angedeutet, ohne daß beispielsweise die Stapelbarkeit und Lagerung der Zahnhalteplatten beeinträchtigt wäre. In diesem Zusammenhang ist es ebenfalls günstig, wenn die stärkeren und dickeren Zähne, die an den Enden angeordnet sind, etwas abgesenkt werden, da hierdurch die Gesamthöhe der Zahnplatte mit eingesetzten Zähnen etwas vermindert wird, was von Bedeutung sein kann, wenn eine Vielzahl unterschiedlicher Zähne im Rahmen eines Zahnsortiments aufbewahrt werden sollen.

Zudem bietet die Ausgestaltung, die von den vorgewölbten Ober- und Unterstegen gebildet wird, einen verbesserten seitlichen Einblick, und man kann vor der Entnahme der Zähne für die anfallende Prothetik den optischen Eindruck der Zähne auch in Seitenansicht beurteilen.

Besonders günstig ist es ferner, wenn die erfindungsgemäße Zahnhalteplatte aus einem dunklen Material hergestellt ist, und auch ein beispielsweise mit Ruß dunkel eingefärbtes Wachs verwendet wird. Aufgrund der engen Nachbarschaft zu den vorgewölbten Ober- und Unterstegen kommt dann die Transluzenz der Zähne besser zur Geltung, und der Zahn wirkt leuchtender.

Weitere Vorteile, Einzelheiten und Merkmale ergeben sich aus der nachstehenden Beschreibung eines Ausführungsbeispiels anhand der Zeichnung.

Es zeigen:
- Fig. 1: eine Draufsicht auf eine Ausführungsform einer erfindungsgemäßen Zahnhalteplatte;
- Fig. 2: einen Schnitt durch die Zahnhalteplatte gemäß Fig. 1, entlang der Linie II-II aus Fig. 4;
- Fig. 3: einen Schnitt der Zahnhalteplatte in der Ausführungsform gemäß Fig. 1, entlang der Linie III-III aus Fig. 4;
- Fig. 4: eine Unteransicht der Zahnhalteplatte gemäß Fig. 1; und
- Fig. 5: einen Schnitt entlang der Linie V-V gemäß Fig. 1.

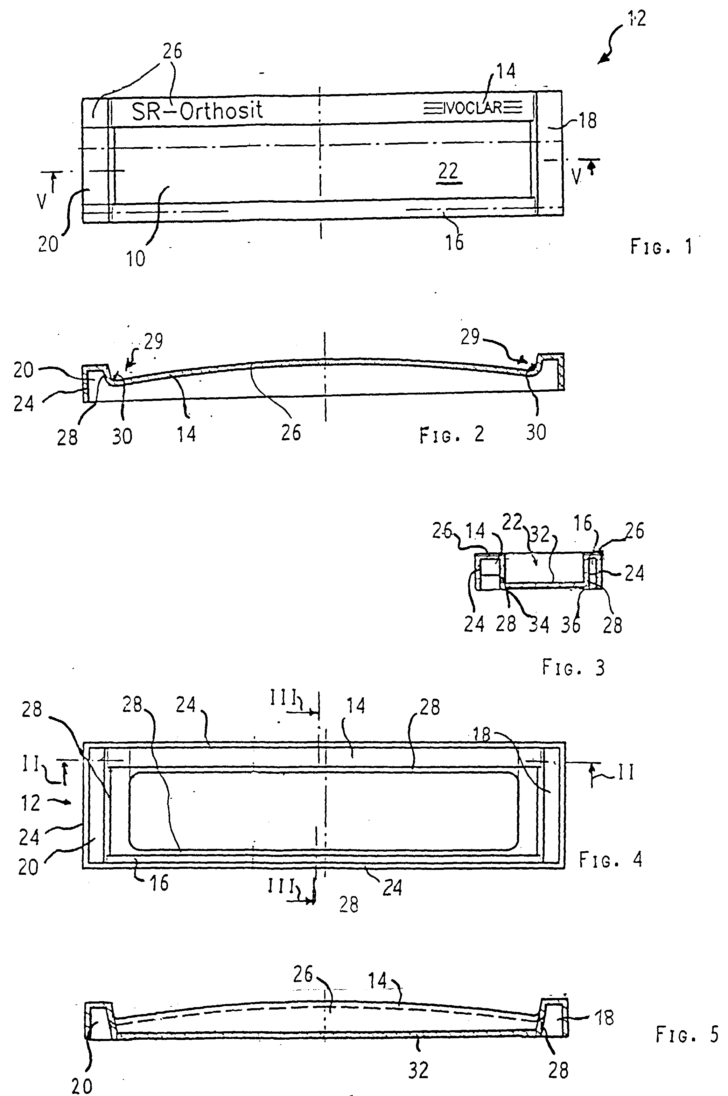

Die in Fig. 1 dargestellte Ausführungsform einer Zahnhalteplatte 10 weist einen Plattenkörper 12 auf, der für die Aufnahme von nicht dargestelltem Wachs ausgebildet ist, in welches ebenfalls nicht dargestellte Zähne eingebracht werden können. Der Plattenkörper 12 weist einen Obersteg 14 und einen Untersteg 16 sowie zwei Seitenstege 18 und 20 auf. In dem Bereich zwischen diesen Stegen 14 bis 20 erstreckt sich eine Wachsaufnahme 22. Es versteht sich, daß hier unter Wachsaufnahme eine im wesentlichen flach quaderförmige Aufnahme für eine Klebemasse zu verstehen ist, die vollflächig den Bereich zwischen den Stegen 14 bis 20 ausfüllt und nicht auf Wachs im chemischen Sinne beschränkt ist.

Im Beispielsfalle ist der Obersteg 14 etwas breiter als der Untersteg 16. Es versteht sich, daß die Abmessungen nach Bedarf gewählt werden können und beispielsweise der gewünschten Beschriftung - wie aus Fig. 1 ersichtlich ist - Rechnung tragen können.

Sämtliche Stege weisen, wie aus Fig. 3 besser ersichtlich ist, Außenschenkel 24, Mittelschenkel 26 sowie Innenschenkel 28 auf und haben dementsprechend einen im wesentlichen U-förmigen Grundaufbau und sind hohl. Diese Ausgestaltung kommt der Stabilität des Plattenkörpers 12 zugute.

Wie aus Fig. 2 besser ersichtlich ist, weist der Obersteg 14 einen konvex vorgewölbten Grundaufbau mit einem entsprechend vorgewölbten Mittelschenkel 26 auf. Die Vorwölbung erfolgt so weit, daß die Höhe des Oberstegs 14 in der Mitte etwa gleich hoch wie die Höhe der Seitenschenkel 18 und 20 ist. In seitlichen Bereichen 29 springt der Obersteg 14 - und ebenso der in ähnlicher Weise ausgebildete Untersteg 16 - dementsprechend zurück. Beim Übergang zum Seitensteg ist jeweils ein Radius 30 vorgesehen, der den Mittelschenkel 26 des Obersteges 14 mit dem Innenschenkel 28 der Seitenstege 18 und 20 verbindet. Dieser Innenradius 30 kann in der Größenordnung von 0,5 bis 5 mm, insbesondere etwa 1,5 bis 2 mm, vorgesehen sein und ermöglicht das sanfte Anschließen der Stege aneinander. Der Innenschenkel 28 der Seitenstege 18 und 20 verläuft etwas schräg und etwa in Fortsetzung des Radius' der Vorwölbung des Oberstegs 14. Wie aus Fig. 5 besser ersichtlich ist, setzt sich der Innenschenkel 28 des Seitenstegs 18 bzw. 20 zum Boden 32 der Wachsaufnahme 22 in gleicher Weise fort.

Aus Fig. 3 in Verbindung mit den Figuren 1 und 2 ist der insgesamt kastenförmige Aufbau des erfindungsgemäßen Plattenkörpers ersichtlich. Trotz der aus Fig. 2 und 5 ersichtlichen Wölbung sind die Außenabmessungen des Plattenkörpers 12 - abgesehen von den als Einkerbungen wirkenden Bereichen 29 seitlich neben den Seitenstegen 18 und 20 - im Grunde flachquaderförmig, was der Handhabbarkeit und Anreihbarkeit entscheidend zugute kommt. Die Länge der Zahnhalteplatte kann beispielsweise 59,7 mm für eine Zahnhalteplatte für sechs Zähne, insbesondere Frontzähne, betragen, und 86,5 mm für eine Zahnhalteplatte für acht Zähne, insbesondere für Molare und Prämolare. Die Breite, also die Erstreckung quer über Ober- und Unterstege 14, 16 beträgt in beiden Fällen 22,5 mm. Mit diesen Abmessungen läßt sich ein modular anreihbares Konzept verwirklichen. Der Radius der Ober- und Unterstege 14 und 16 kann zwischen 50 und 500 mm, bevorzugt zwischen 50 und 300 mm und insbesondere zwischen 80 und 120 mm für schmalere Zahnhalteplatten 10 und zwischen 220 und 260 mm für breitere Zahnhalteplatten 10 betragen.

Wie aus Fig. 3 ferner ersichtlich ist, ist der Boden 32 durch ganz kurze Stützflansche 34 und 36 seitlich benachbart zu den Stegen 14 und 16 abgestützt. Im Raum zwischen den Stützflanschen 34 und 36 kann beispielsweise eine erhabene Beschriftung angebracht sein.

Auch die Außenschenkel 24 der Stege 14 und 16 sind je bis nach ganz unten gezogen und dienen der Abstützung auf einer Unterlage, die hier nicht dargestellt ist.

Aus Fig. 4 ist ersichtlich, daß die Zahnhalteplatte 10 von hinten offen ist und in auf einer Unterlage liegender Form einen Hohlraum abdeckt. Die Verwendung aus profiliertem Hohlmaterial kommt der Stabilität im Verhältnis zur Gewichtsersparnis und damit zugleich den Herstellkosten zugute. Hier wie auch in den weiteren Figuren sind gleiche Teile mit gleichen Bezugszeichen bezeichnet.

Es ist ersichtlich, daß bei dem dargestellten Ausführungsbeispiel die Wachsaufnahme 22 erheblich mehr als die Hälfte der Gesamtfläche der Zahnhalteplatte 10 einnimmt. Es versteht sich, daß dieser Anteil in weiten Bereichen an die Erfordernisse anpaßbar ist und insbesondere etwas weniger als die Hälfte betragen kann.

Wie aus Fig. 5 ersichtlich ist, weisen die Stege 14 und 16, von denen der Obersteg 14 aus Fig. 5 ersichtlich ist, eine Krümmung auf, während der Boden 32 flach ist. Der Abstand zwischen dem Boden 32 und dem Mittelschenkel 26 der Stege 14 und nimmt demnach über die Längserstreckung der Wachsaufnahme 22 bei dieser Ausgestaltung zunächst zu und dann wieder ab. Ein flacher Wachsstreifen ist einsetzbar oder eingießbar und ist in der Wachsaufnahme 22 unverlierbar gehalten.

Bei Bedarf kann auch im Innenschenkel 28, Seitensteg 18 und 20 je eine Hinterschneidung vorgesehen sein. Diese ermöglicht bei Bedarf die Verankerung des Wachsstreifens in der Wachsaufnahme 22.

## Patentansprüche

1. Zahnhalteplatte, mit einem Plattenkörper und einer im wesentlichen flachquaderförmigen Wachsaufnahme für die Aufnahme einer zähviskosen Masse, wie Wachs, mit welcher eine Mehrzahl von Zähnen nebeneinander lagerbar ist, welche Wachsaufnahme von einem Ober- und einem Untersteg und zwei Seitenstegen abgeschlossen ist, die gegenüber dem Boden der Wachsaufnahme vorspringen, dadurch **gekennzeichnet**, daß der Obersteg (14) und der Untersteg (16) gegenüber dem Boden (32) vorgewölbt sind.

2. Zahnhalteplatte nach Anspruch 1, dadurch gekennzeichnet, daß die Seitenstege (18, 20) gegenüber benachbarten Bereichen (29) von Ober- (14) und Untersteg (16) vorspringen.

3. Zahnhalteplatte nach einem der vorhergehenden Ansprüche, dadurch gekennzeichnet, daß der Boden (32) der Wachsaufnahme (22) sich im wesentlichen gerade erstreckt.

4. Zahnhalteplatte nach einem der vorhergehenden Ansprüche, dadurch gekennzeichnet, daß mindestens einer der vorgewölbten Ober- (14) oder Unterstege (16) eine Mittenhöhe aufweist, die etwa der Höhe der Seitenstege (18, 20) entspricht oder knapp unter dieser ist.

5. Zahnhalteplatte nach einem der vorhergehenden Ansprüche, dadurch gekennzeichnet, daß der Boden (32) mindestens einen Stützflansch (34, 36f) aufweist, mit welchem er bei Druck über die aufgenommene zähviskose Masse in der Wachsaufnahme (22) auf einer Unterlage abstützbar ist, wobei insbesondere zwei den Ober- (14) und Unterstegen (16) benachbarte Stützflansche (34, 36) vorgesehen sind, die vollflächig auf der Unterlage aufliegen.

6. Zahnhalteplatte nach einem der vorhergehenden Ansprüche, dadurch gekennzeichnet, daß den Boden (32) der Wachsaufnahme (22) zur Unterlage hin ringsum umgebende Stützflansche (34, 36) vorgesehen sind, die die Unterseite des Bodens (32) um weniges, beispielsweise um 0,1 bis 1 mm, insbesondere um etwa 0,3 mm überragen.

7. Zahnhalteplatte nach einem der vorhergehenden Ansprüche, dadurch gekennzeichnet, daß die Oberstege (14), Unterstege (16) und Seitenstege (18, 20) je Innenschenkel (28), die der Wachsaufnahme (22) zugewandt sind, Mittelschenkel (26) und von der Wachsaufnahme (22) abgewandte Außenschenkel (24) aufweisen und daß insbesondere die Schenkel (24, 28) - abgesehen von dem Übergangsbereich zwischen den Seitenstegen (18, 20) und dem Ober- (14) und dem Untersteg (16) - je vollständig zur Bildung einer Flachauflage bis zur Unterlage heruntergezogen sind.

8. Zahnhalteplatte nach einem der vorhergehenden Ansprüche, dadurch gekennzeichnet, daß die Ober- (14), Unter- (16) und Seitenstege (18, 20) hohl in Form eines umgekehrten U ausgebildet sind und die diese Stege außen abschließenden Außenschenkel (24) eine den so gebildeten Hohlraum gegen eine Unterlage abschließende Fläche aufspannen.

9. Zahnhalteplatte nach einem der vorhergehenden Ansprüche, dadurch gekennzeichnet, daß die Seitenstege (18, 20) an ihren einen Übergang zu den Mittelschenkeln (26) der Ober- und Unterstege (14, 16) bildenden Innenschenkel (28) einen Innenradius (30) aufweisen.

## Claims

1. A dental support plate, having a plate body and a substantially flat parallelepipedal wax receptacle for receiving a viscous compound, such as wax, with which a plurality of teeth can be mounted side by side, which wax receptacle is terminated by an upper web and a lower web and two lateral webs which project relative to the bottom of the wax receptacle, characterised in that the upper web (14) and the lower web (16) are arcuately curved relative to the bottom (32).

2. A dental support plate according to Claim 1, characterised in that the lateral webs (18,20) project relative to adjacent regions (29) of the upper web (14) and lower web (16).

3. A dental support plate according to either one of the preceding Claims, characterised in that the bottom (32) of the wax receptacle (22) extends substantially straight.

4. A dental support plate according to any one of the preceding Claims, characterised in that at least one of the protruding upper (14) or lower webs (16) has a centre height which corresponds approximately to the height of the lateral webs (18,20) or is just below it.

5. A dental support plate according to any one of the preceding claims, characterised in that the bottom (32) has at least one supporting flange (34,36f) [sic] with which it can be supported on a base under pressure via the accommodated viscous compound in the wax receptacle (22), wherein in particular two supporting flanges (34,36) adjoining the upper (14) and lower webs (16) are provided, which are supported fully on the base.

6. A dental support plate according to any one of the preceding claims, characterised in that supporting flanges (34,36) are provided surrounding and supporting the bottom (32) of the wax receptacle (22), which flanges project beyond the underside of the bottom (32) to a small extent, for example by 0.1 to 1 mm, in particular by approximately 0.3 mm.

7. A dental support plate according to any one of the preceding Claims, characterised in that the upper webs (14), lower webs (16) and lateral webs (18,20) each have inner arms (28), which face the wax receptacle (22), central arms (26) and outer arms (24) facing away from the wax receptacle (22), and in that in particular the arms (24,28), apart from the transition zone between the lateral webs (18,20) and the upper web (14) and lower web (16), are each fully extended down to the base so as to form a flat support.

8. A dental support plate according to any one of the preceding Claims, characterised in that the upper webs (14), lower webs (16) and lateral webs (18,20) are hollow in the form of an inverted U and the outer arms (24) outwardly terminating these webs clamp a surface closing the hollow space thus formed against a base.

9. A dental support plate according to any one of the preceding Claims, characterised in that the lateral webs (18,20) have an inner radius (30) at their inner arms (28) forming a transition into the centre arms (26) of the upper and lower webs (14,16).

## Revendications

1. Tablette de support pour dents comprenant un corps de tablette et une zone de logement à cire sensiblement plate et parallélépipédique destinée à recevoir une matière visqueuse, comme de la cire, permettant de fixer côte à côte une pluralité de dents, laquelle zone de logement à cire est délimitée par une traverse supérieure, une traverse inférieure et deux traverses latérales qui font saillie par rapport au fond de la zone de logement à cire, caractérisée en ce que la traverse supérieure (14) et la traverse inférieure (16) sont bombées par rapport au fond (32).

2. Plaquette de support pour dents selon la revendication 1, caractérisée en ce que les traverses latérales (18, 20) font saillie par rapport à des zones (29) voisines de la traverse supérieure (14) et de la traverse inférieure (16).

3. Plaquette de support pour dents selon une des revendications précédentes, caractérisée en ce que le fond (32) de la zone de logement à cire (22) s'étend sensiblement de manière rectiligne.

4. Plaquette de support pour dents selon une des revendications précédentes, caractérisée en ce qu'au moins une des traverses supérieure (14) ou inférieure (16) bombées présente une hauteur au centre qui correspond sensiblement à la hauteur des traverses latérales (18, 20) ou est légèrement inférieure à celle-ci.

5. Plaquette de support pour dents selon une des revendications précédentes, caractérisée en ce que le fond (32) comporte au moins une patte d'appui (34, 36) qui lui permet de prendre appui sur un support en cas d'application d'une pression sur la matière visqueuse logée dans la zone de logement à cire (22), deux pattes d'appui (34, 36), voisines des traverses supérieure (14) et inférieure (16), étant en particulier prévues, qui reposent avec toute leur surface sur le support.

6. Plaquette de support pour dents selon une des revendications précédentes, caractérisée en ce qu'il est prévu des pattes d'appui (34, 36) qui font tout le tour du fond (32) de la zone de logement à cire (22) en direction du support et qui dépassent légèrement par rapport au côté inférieur du fond (32), par exemple de 0,1 à 1 mm, en particulier d'environ 0,3 mm.

7. Plaquette de support pour dents selon une des revendications précédentes, caractérisée en ce que les traverses supérieure (14), inférieure (16) et les traverses latérales (18, 20) présentent chacune des ailes intérieures (28) qui sont tournées vers la zone de logement à cire (22), des ailes centrales (26) et des ailes extérieures (24) tournées à l'opposé de la zone de logement à cire (22) et que notamment les ailes (24, 28), abstraction faite de la zone de transition entre les traverses latérales (18, 20) et la traverse supérieure (14) et la traverse inférieure (16), sont chacune prolongées complètement vers le bas jusqu'au support pour former un appui plat.

8. Plaquette de support pour dents selon une des revendications précédentes, caractérisée en ce que les traverses supérieure (14), inférieure (16) et latérales (18, 20) sont creuses et ont la forme d'un U renversé et les ailes extérieures (24) délimitant extérieurement ces traverses définissent une surface délimitant la cavité ainsi formée par rapport à un support.

9. Plaquette de support pour dents selon une des revendications précédentes, caractérisée en ce que les traverses latérales (18, 20) présentent un rayon intérieur (30) au niveau de leurs ailes intérieures (28) formant une transition vers les ailes centrales (26) des traverses supérieure et inférieure (14, 16).
